# FASCICULE DE BREVET EUROPEEN

(11) **EP 4 314 563 B1**
(45) Date de publication et mention de la délivrance du brevet: **03.09.2025**
(21) Numéro de dépôt: 22717576.7
(22) Date de dépôt: 22.03.2022
(51) Int. Cl.: F04D 17/04, F01P 5/02, F01P 5/06, F01P 11/10, F01P 3/18, B60K 11/04, F04D 13/06, F04D 25/06, B60K 1/00, B60K 11/08, B60K 11/02

(54) **MODULE DE REFROIDISSEMENT POUR VEHICULE AUTOMOBILE ELECTRIQUE OU HYBRIDE A TURBOMACHINE TANGENTIELLE**
KÜHLMODUL FÜR EIN ELEKTRO- ODER HYBRIDKRAFTFAHRZEUG MIT EINER TANGENTIALFLUSSTURBOMASCHINE
COOLING MODULE FOR AN ELECTRIC OR HYBRID MOTOR VEHICLE, HAVING A TANGENTIAL-FLOW TURBOMACHINE

(30) Priorité: 25.03.2021 FR 2102981
(43) Date de publication de la demande: 07.02.2024
(73) Titulaire: VALEO SYSTEMES THERMIQUES, 78320 Le Mesnil Saint-Denis (FR)
(72) Inventeur: MAMMERI, Amrid, 78322 Le Mesnil-Saint-Denis Cedex (FR); AZZOUZ, Kamel, 78322 Le Mesnil-Saint-Denis Cedex (FR); TRAORE, Issiaka, 78322 Le Mesnil-Saint-Denis Cedex (FR); GARNIER, Sebastien, 78322 Le Mesnil-Saint-Denis Cedex (FR)
(74) Mandataire: Valeo Powertrain Systems
(86) Numéro de dépôt international: PCT/EP2022/057542
(87) Numéro de publication internationale: WO 2022/200382

(56) Documents cités:
- EP-A1- 2 525 100
- WO-A1-2020/188191
- FR-A1- 2 746 847
- JP-A- H0 865 983
- US-A1- 2018 100 425

## Description

La présente invention se rapporte à un module de refroidissement pour véhicule automobile électrique ou hybride, à turbomachine tangentielle.

Un module de refroidissement (ou module d'échange de chaleur) d'un véhicule automobile comporte classiquement au moins un échangeur de chaleur et un dispositif de ventilation adapté à générer un flux d'air au contact du au moins un échangeur de chaleur. Le dispositif de ventilation permet, par exemple, de générer un flux d'air au contact de l'échangeur chaleur, à l'arrêt du véhicule ou à faible vitesse de roulage.

Ce dispositif de ventilation se présente par exemple sous la forme d'une turbomachine tangentielle comprenant une turbine montée rotative autour d'un axe de rotation et entraînée en mouvement par un moteur. Ce moteur se situe notamment en-dehors du boîtier du module de refroidissement qui comporte la turbomachine tangentielle, ce qui augmente l'encombrement général dudit module.

Or l'espace disponible au sein du véhicule automobile pour l'agencement du module de refroidissement est relativement restreint. Il convient donc de privilégier une conception compacte du module de refroidissement en optimisant l'architecture de ses composants.

Chacun des documents d'art antérieur FR2746847A1, EP2525100A1 et JPH0865983A divulgue un module de refroidissement comportant un ventilateur avec un rotor monté rotatif autour d'un stator et au moins un étage de pales relié mécaniquement au rotor.

Le but de la présente invention est donc de remédier au moins partiellement aux inconvénients de l'art antérieur et de proposer un module de refroidissement moins encombrant et tout aussi performant.

La présente invention concerne donc un module de refroidissement pour véhicule automobile à moteur électrique ou hybride selon la revendication 1.

Un tel agencement du moteur au sein de la turbomachine permet de diminuer le volume du module de refroidissement dans le sens de la largeur du véhicule automobile tout en conservant les performances en termes de ventilation. En effet, l'écoulement du flux d'air au sein de la turbine est tangentiel, ce qui créé un vortex au centre de la turbine, c'est-à-dire un espace dans lequel la vitesse d'écoulement du flux d'air est quasiment nulle. Le moteur de la turbomachine est situé dans ce vortex, il ne constitue donc a priori pas un obstacle à la circulation d'air au sein de la turbomachine.

L'invention peut en outre comprendre un ou plusieurs des aspects suivants pris seuls ou en combinaison :
- les bras radiaux liant le rotor à la turbine sont disposés avec un intervalle angulaire régulier autour de l'axe de rotation de la turbine ;
- le stator est fixé sur une plaquette solidaire d'une paroi latérale du boîtier collecteur de sorte que le moteur soit disposé à une extrémité de la turbine ;
- la turbine comporte plusieurs étages de pales alignées suivant l'axe longitudinale de la turbine ;
- une dimension longitudinale du moteur est supérieure à la valeur du diamètre du moteur ;
- la turbine comporte une deuxième extrémité située à l'opposé de la première extrémité et cette deuxième extrémité comporte un moyen pour former une liaison pivot directe avec le boîtier collecteur, et
- le moyen pour former une liaison pivot directe avec le boîtier collecteur est un roulement ou un palier de roulement situé à l'intérieur du boîtier collecteur.

D'autres caractéristiques et avantages de la présente invention apparaîtront plus clairement à la lecture de la description suivante, fournie à titre illustratif et non limitatif, et des dessins annexés dans lesquels :
[Fig 1] la figure 1 montre une représentation schématique de l'avant d'un véhicule automobile en vue de côté ;
[Fig 2] la figure 2 montre une représentation schématique en perspective et en coupe partielle de l'avant d'un véhicule automobile et d'un module de refroidissement ;
[Fig 3] la figure 3 montre une vue en coupe du module de refroidissement de la figure 2 ; et
[Fig 4] la figure 4 montre une vue en coupe du boîtier du module de refroidissement suivant le plan de coupe A-A de la figure 3.

Sur les différentes figures, les éléments identiques portent les mêmes numéros de référence.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées et/ou interchangées pour fournir d'autres réalisations.

Dans la présente description, on peut indexer certains éléments ou paramètres, comme par exemple premier élément ou deuxième élément ainsi que premier paramètre et second paramètre ou encore premier critère et deuxième critère, etc. Dans ce cas, il s'agit d'un simple indexage pour différencier et dénommer des éléments ou paramètres ou critères proches, mais non identiques. Cette indexation n'implique pas une priorité d'un élément, paramètre ou critère par rapport à un autre et on peut aisément interchanger de telles dénominations sans sortir du cadre de la présente description. Cette indexation n'implique pas non plus un ordre dans le temps par exemple pour apprécier tel ou tel critère.

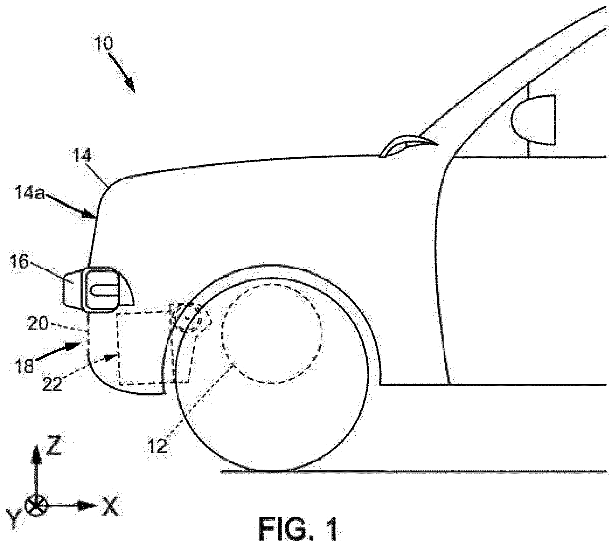

Sur les figures 1 à 4 est représenté un trièdre XYZ afin de définir l'orientation des différents éléments les uns des autres. Une première direction, notée X, correspond à une direction longitudinale du véhicule. Elle correspond également à une direction inverse à la direction d'avancement du véhicule. Une deuxième direction, notée Y, est une direction latérale ou transversale. Enfin, une troisième direction, notée Z, est verticale. Les directions, X, Y, Z sont orthogonales deux à deux.

Sur l'ensemble des figures, le module de refroidissement selon la présente invention est illustré dans une position fonctionnelle, c'est-à-dire quand il est disposé au sein d'un véhicule automobile.

La figure 1 illustre de manière schématique la partie avant d'un véhicule automobile 10 électrique ou hybride pouvant comporter un moteur 12 électrique ou hybride. Le véhicule 10 comporte notamment une carrosserie 14 et un pare-chocs 16 portés par un châssis (non représenté) du véhicule automobile 10. Un module de refroidissement 22 est disposé en dessous du pare-chocs 16 et en regard du soubassement du véhicule automobile 10. Optionnellement, la carrosserie 14 peut définir une baie de refroidissement 18, c'est-à-dire une ouverture à travers la carrosserie 14. Cette baie de refroidissement 18 se trouve de préférence face au module de refroidissement 22. Une calandre 20 peut éventuellement protéger ce module de refroidissement 22.

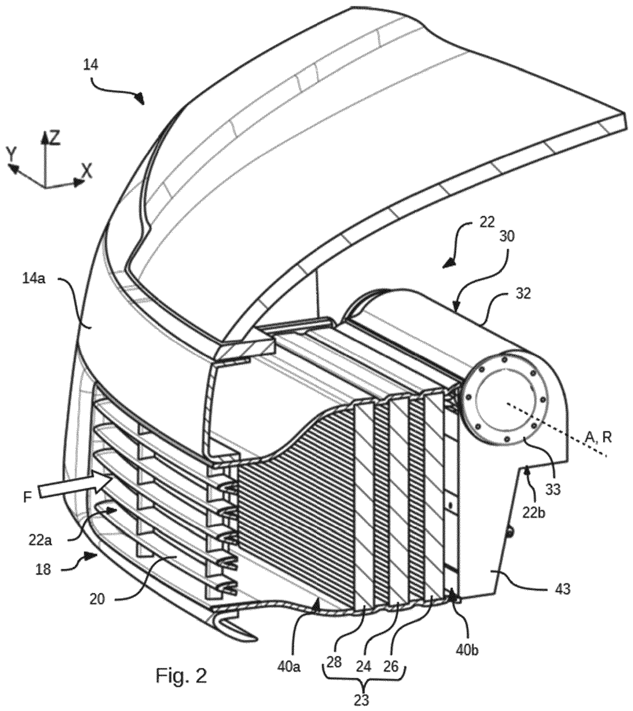

Comme le montrent les figures 2 à 4, le module de refroidissement 22 est destiné à être traversé par un flux d'air F parallèle à la direction X allant de l'avant vers l'arrière du véhicule 10. La direction X correspond plus particulièrement à l'axe longitudinal du module de refroidissement 22 et le flux d'air F circule depuis une entrée d'air 22a vers une sortie d'air 22b. Dans la présente demande, on qualifie un élément d'en « amont » ou d'en « aval » selon la direction longitudinale X du module de refroidissement 22, un élément qui est respectivement disposé plus vers l'avant ou vers l'arrière qu'un autre élément. L'avant correspond à l'avant du véhicule automobile 10 à l'état monté ou alors la face du module de refroidissement 22 par laquelle le flux d'air F est destiné à entrer dans le module de refroidissement 22. L'arrière correspond quant à lui à l'arrière du véhicule automobile 10 ou alors à la face du module de refroidissement 22 par laquelle le flux d'air F est destiné à ressortir du module de refroidissement 22.

De manière similaire, on entend par « supérieur » et « inférieur » une orientation selon la direction Z. Un élément dit supérieur sera plus proche du toit du véhicule 10 et un élément dit inférieur sera plus proche du sol.

Le module de refroidissement 22 comporte essentiellement un carénage 40 formant un conduit interne entre une extrémité amont 40a et une extrémité avale 40b opposées l'une à l'autre. Ce conduit interne est de préférence orienté parallèlement à la direction X de sorte que l'extrémité amont 40a est orientée vers l'avant du véhicule 10 en regard de la baie de refroidissement 18 et de sorte que l'extrémité aval 40b est orientée vers l'arrière du véhicule 10.

Selon les modes de réalisation du module de refroidissement 22 illustré sur les figures 2 à 4, le carénage 40 formant le conduit interne comporte quatre parois de jonction 410 dont une paroi supérieure 411 et une paroi inférieure 412 disposées en vis-à-vis l'une de l'autre ainsi que deux parois latérales (non visible sur les figures).

À l'intérieur dudit carénage 40 est disposé au moins un échangeur de chaleur 24, 26, 28. Sur les figures 2 à 4, le module de refroidissement 22 comprend trois échangeurs de chaleur 24, 26, 28 regroupés au sein d'un ensemble d'échangeurs de chaleur 23. Il pourrait toutefois en comporter plus ou moins suivant la configuration souhaitée.

Un premier échangeur de chaleur 24 peut par exemple être configuré pour relâcher de l'énergie calorifique du flux d'air F. Ce premier échangeur de chaleur 24 peut plus particulièrement être un condenseur connecté à un circuit de refroidissement (non représenté), par exemple afin de refroidir les batteries du véhicule 10. Ce circuit de refroidissement peut par exemple être un circuit de climatisation apte à refroidir les batteries ainsi qu'un flux d'air interne à destination de l'habitacle du véhicule automobile.

Un deuxième échangeur de chaleur 26 peut également être configuré pour relâcher de l'énergie calorifique dans le flux d'air F. Ce deuxième échangeur de chaleur 26 peut plus particulièrement être un radiateur connecté à un circuit de gestion thermique (non représenté) d'éléments électriques tel que le moteur électrique 12.

Le premier échangeur de chaleur 24 étant généralement un condenseur d'un circuit de climatisation, ce dernier a besoin que le flux d'air F soit le plus « frais » possible en mode climatisation. Pour cela, le deuxième échangeur de chaleur 26 est de préférence disposé en aval du premier échangeur de chaleur 24 dans le sens de circulation du flux d'air F. Il est néanmoins tout à fait possible d'imaginer que le deuxième échangeur de chaleur 26 soit disposé en amont du premier échangeur de chaleur 24.

Le troisième échangeur de chaleur 28 peut lui aussi être configuré pour relâcher de l'énergie calorifique dans le flux d'air. Ce troisième échangeur de chaleur 28 peut plus particulièrement être un radiateur connecté à un circuit de gestion thermique (non représenté), pouvant être distinct de celui connecté au deuxième échangeur de chaleur 26, pour des éléments électriques tel que l'électronique de puissance. Il est également tout à fait possible d'imaginer que le deuxième 26 et le troisième 28 échangeur de chaleur soient connectés à un même circuit de gestion thermique, par exemple connectés en parallèle l'un de l'autre.

Toujours selon l'exemple illustré aux figures 2 à 4, le deuxième échangeur de chaleur 26 est disposé en aval du premier échangeur de chaleur 24 tandis que le troisième échangeur de chaleur 28 est disposé en amont du premier échangeur de chaleur 24. D'autres configurations peuvent néanmoins être envisageables comme par exemple les deuxième 26 et troisième 28 échangeurs de chaleurs disposés tous deux en aval ou en amont du premier échangeur de chaleur 24.

Sur le mode de réalisation illustré, chacun des échangeurs de chaleur 24, 26, 28 présente une forme générale parallélépipédique déterminée par une longueur, une épaisseur et une hauteur. La longueur s'étend le long de la direction Y, l'épaisseur le long de la direction X et la hauteur dans la direction Z. Les échangeurs de chaleur 24, 26, 28 s'étendent alors selon un plan général parallèle à la direction verticale Z et la direction latérale Y. Ce plan général est ainsi perpendiculaire à la direction longitudinale X du module de refroidissement 22, les échangeurs de chaleur 24, 26, 28 sont donc perpendiculaires au flux d'air F destiné à les traverser.

Le module de refroidissement 22 comporte également un boîtier collecteur 41 disposé en aval du carénage 40 et de l'ensemble 23 d'échangeurs de chaleur 24, 26, 28. Plus précisément, le boîtier collecteur 41 est juxtaposé à l'extrémité avale 40b du carénage 40, il est donc aligné avec le carénage 40 suivant l'axe longitudinal du module de refroidissement 22. Le boîtier collecteur 41 comporte notamment la sortie d'air 22b destinée à refouler le flux d'air F. Le boîtier collecteur 41 peut venir de matière avec le carénage 40 ou bien être une pièce rapportée fixée à l'extrémité avale 40b dudit carénage 40.

Ce boîtier collecteur 41 est configuré pour recevoir une turbomachine tangentielle 30 elle-même configurée de sorte à générer le flux d'air F traversant l'ensemble d'échangeurs de chaleur 23. Plus particulièrement, le boîtier collecteur 41 peut comporter une volute 44 au centre de laquelle est disposée la turbomachine tangentielle 30, cette volute 44 peut délimiter au moins partiellement la sortie d'air 22b.

Dans l'exemple illustré sur l'ensemble des figures 2 à 4, la turbomachine tangentielle 30 est dans une position haute, notamment dans le tiers supérieur du boîtier collecteur 41, de manière préférée dans le quart supérieur du boîtier collecteur 41. Ceci permet notamment de protéger la turbomachine tangentielle 30 en cas de submersion et/ou de limiter l'encombrement du module de refroidissement 22 dans sa partie inférieure. Dans ce cas de figure, la sortie d'air 22b du flux d'air F est préférentiellement orientée vers la partie inférieure du module de refroidissement 22.

Il est néanmoins possible d'imaginer que la turbomachine tangentielle 30 soit dans une position basse, notamment dans le tiers inférieur du boîtier collecteur 41. Cela permettrait de limiter l'encombrement du module de refroidissement 22 dans sa partie haute. Dans ce cas de figure, la sortie d'air 22b du flux d'air sera préférentiellement orientée vers la partie supérieure du module de refroidissement 22. Alternativement, la turbomachine tangentielle 30 peut être dans une position médiane, notamment dans le tiers médian de la hauteur du premier boîtier collecteur 41, par exemple pour des raisons d'intégration du module de refroidissement 22 dans son environnement. Ces alternatives ne sont pas illustrées.

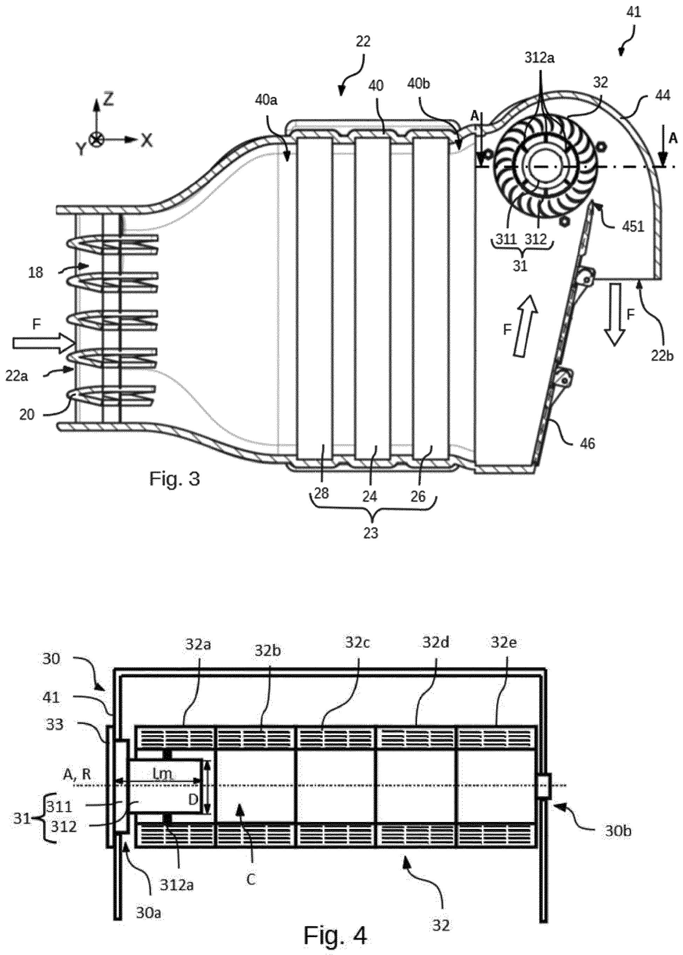

En reprenant l'exemple illustré sur la figure 3, le boîtier collecteur 41 comporte, disposée en regard de l'extrémité avale 40b du carénage 40, une paroi de guidage 46 qui permet de guider l'air à l'issue de l'ensemble d'échangeurs de chaleur 23 vers la sortie 22b. La paroi de guidage 46 comporte plus particulièrement un bord amont 451 permettant de délimiter la sortie 22b du flux d'air F de manière complémentaire avec la volute 44. Par bord amont 451, on entend ici le bord de la sortie d'air 22b le plus proche de l'extrémité avale 40b du carénage 40. Ainsi, ce boîtier collecteur 41 permet de récupérer le flux d'air F traversant l'ensemble d'échangeurs de chaleur 23 et d'orienter ce flux d'air F vers la sortie d'air 22b, ceci est notamment illustré par les flèches représentant le flux d'air F sur la figure 3.

La turbomachine tangentielle 30 disposée au centre de la volute 44 comprend une turbine 32 montée rotative autour d'un axe de rotation A qui est par exemple parallèle à la direction Y, comme illustré notamment sur la figure 2. La turbine 32 est généralement de forme sensiblement cylindrique et peut comporter au moins un étage de pales 32a, 32b, 32c, 32d et 32e (figure 4). Par « étage de pales », nous comprenons ici un arrangement de plusieurs pales qui forment un tronçon longitudinal du cylindre de la turbine 32. Ainsi un « étage de pales » désigne plusieurs pales arrangées parallèlement entre elle sur le manteau dudit cylindre. La turbine 32 peut comporter plusieurs étages de pales 32a, 32b, 32c, 32d et 32e alignées suivant l'axe longitudinale R de la turbine. Le nombre d'étages de pales formant la turbine 32 peut être compris entre deux et douze. La turbine 32 représentée schématiquement sur la figure 4 comprend par exemple cinq étages de pales 32a, 32b, 32c, 32d et 32e.

La turbomachine tangentielle 30 comporte également un moteur 31 (visible sur les figures 2, 3 et 4) configuré pour entraîner la turbine 32 en rotation autour de l'axe A, par exemple à une vitesse comprise entre 200 tour/min et 14 000 tour/min. Cette plage de vitesse permet notamment de limiter le bruit généré par la turbomachine tangentielle 30 lorsqu'elle est en fonctionnement.

Le moteur 31 comporte un stator 311 solidaire du boîtier 41 et un rotor 312 monté rotatif autour du stator 311. Le stator 311 et le rotor 312 sont agencés de telle sorte que les pales de la turbine 32 sont disposées circonférentiellement autour du rotor 312, ceci est plus particulièrement illustré sur les figures 3 et 4. Ainsi, le moteur 31 est compris dans un cylindre creux C (figure 4) formé au cœur du au moins un étage de pales 32a, 32b, 32c, 32d et 32e de la turbine 32. Le moteur 31 se situe donc à l'intérieur de la turbomachine tangentielle 30 disposée au sein de la volute 44 et non à l'extérieur du boîtier 41 comme c'est le cas dans l'art antérieur. Cet agencement permet de limiter l'encombrement du module de refroidissement : disposer le moteur 31 à l'intérieur du cylindre creux C au sein de la turbine 32 permet un gain de place considérable sans pour autant nuire aux performances du module de refroidissement.

Pour faciliter l'insertion du moteur 31 à l'intérieur du cylindre creux C formé au cœur du au moins un étage de pales 32a, 32b, 32c, 32d et 32e de la turbine 32, l'on peut plus particulièrement considérer le cas d'un moteur 31 de forme cylindrique présentant une dimension longitudinale Lm qui est supérieure à la valeur du diamètre D dudit moteur 31. Les dimensions transversales du moteur 31 sont donc d'un ordre inférieur à celui de sa dimension longitudinale Lm.

Dans le mode de réalisation représenté sur la figure 4, la dimension longitudinale Lm du moteur 31 est à peu près de la même longueur que l'étage de pale 32a au creux duquel il est agencé. Selon un mode de réalisation non illustré, la dimension longitudinale Lm du moteur 31 peut être supérieure à la longueur d'un étage de pale de la turbine 32. Globalement, la dimension longitudinale Lm du moteur 31 est inférieure à la dimension latérale du boîtier 41 du module de refroidissement 22. Une forme longitudinale du moteur 31 permet également de mieux répartir le poids de celui-ci le long de l'axe de rotation A de la turbine 32 au sein de la volute 44.

Selon un mode de réalisation préférentiel du module de refroidissement illustré sur les figures 2 à 4, l'axe longitudinal R du rotor 312 peut être confondu avec l'axe de rotation A de la turbine 32. Cette coaxialité entre le rotor 312 et la turbine 32 permet de faciliter le montage de ces éléments au sein de la turbomachine 30 lors de la phase de l'assemblage et elle empêche l'apparition d'un balourd lors de la rotation du rotor 312 et de la turbine 32 autour de cet axe commun, limitant ainsi d'engendrer de potentielles vibrations au sein de la turbomachine 30 qui pourrait nuire à son bon fonctionnement.

Dans le cas particulier où l'axe longitudinal R du rotor 312 n'est pas coaxial avec l'axe de rotation A de la turbine 32, mais décalé parallèlement à celui-ci, l'on peut envisager un mode de réalisation de la turbomachine 30 dans lequel l'arbre de sortie du moteur 31 et la turbine 32 sont reliés par un mécanisme de transmission, tel qu'un système de courroie ou une chaîne, qui est configuré pour assurer la transmission du mouvement rotatif entre l'arbre de sortie du moteur 31 et la turbine 32. Puisque cette configuration permet de s'affranchir de la condition de coaxialité, cette alternative offre la perspective d'un positionnement relatif de la turbine 32 et du rotor 312 un peu moins exigeant, mais elle peut en revanche apporter des coûts supplémentaires du fait de la nécessité d'un mécanisme de transmission. Cette alternative n'est pas illustrée sur les figures.

Par ailleurs, l'au moins un étage de pales 32a, 32b, 32c, 32d et 32e de la turbine 32 est relié mécaniquement au rotor 312 du moteur 31 de sorte à être entraîné en rotation par ce dernier. Afin solidariser la turbine 32 au rotor 312, celui-ci comporte des bras 312a qui s'étendent radialement depuis le rotor 312 jusqu'à la turbine 32. Les bras 312a sont notamment disposés avec un intervalle angulaire régulier autour de l'axe de rotation A de la turbine 32, comme illustré notamment sur la figure 3. Ceci permet d'assurer une liaison solide entre le rotor 312 et la turbine 32. Sur cette même figure, le nombre de bras 312a liant le rotor 312 à la turbine est au nombre de six, ainsi l'angle séparant deux bras 312a voisins est de 60°. Selon un mode de réalisation non illustré de la turbine 32, celle-ci peut coopérer avec un rotor 312 comportant quatre bras 312a, l'angle séparant deux bras 312a voisins est alors de 90°. Plus généralement, le nombre de bras 312a entre le rotor 312 et la turbine 32 peut être compris entre deux et dix. Les bras 312a peuvent venir de matière avec le rotor 312 et/ou la turbine 32 ou alors ces bras 312a peuvent être des pièces individuelles qui sont solidarisées par vissage ou collage ou soudage ou un autre moyen de fixation au rotor 312 et à la turbine 312 au moment du montage.

Le stator 311 du moteur 31 peut être fixé sur une plaquette 33 (visible sur les figures 2 et 4) qui est solidaire du boîtier 41. Dans l'exemple illustré sur l'ensemble des figures 2 à 4, la plaquette 33 est solidaire d'une paroi latérale 43 du boîtier collecteur 41, de sorte que le moteur 31 soit disposé à une première extrémité 30a de la turbine 32. La plaquette 33 est par exemple de forme circulaire et présente notamment un diamètre supérieur à celui du stator 311 de manière à augmenter la surface de contact intermédiaire entre le stator 311 et la paroi latérale 43 du boîtier collecteur 41. Le boîtier collecteur 41 comporte plus particulièrement deux parois latérales 43 sensiblement perpendiculaire à l'axe de rotation A de la turbine 32, ces parois latérales 43 sont notamment disposées aux extrémités longitudinales de la turbine 32. Fixer le stator 311 sur une telle plaquette 33 est une solution peu onéreuse pour agencer le moteur 31 au sein de la turbomachine tangentielle 30.

De plus, la turbine 32 comporte une deuxième extrémité 30b située à l'opposé de la première extrémité 30a. Contrairement à la première extrémité 30a qui est configurée pour coopérer avec le moteur 31 qui assure la liaison pivot entre le boîtier collecteur 41 et la turbine 32, cette deuxième extrémité 30b comporte un moyen pour former une liaison pivot directe avec le boîtier collecteur 41. Le moyen pour former ladite liaison pivot directe est par exemple un roulement ou un palier de roulement qui peut notamment se situer à l'intérieur du boîtier collecteur 41, il est par exemple agencé sur la face intérieure de la paroi latérale 43 du boîtier collecteur 41. D'autres moyens permettant de raccorder la deuxième extrémité 30b de la turbine 32 au boîtier collecteur 41 autres que des roulements ou des paliers de roulement peuvent être envisagés.

L'invention n'est pas limitée aux exemples de réalisation décrits en regard des figures et d'autres modes de réalisation apparaîtront clairement à l'homme du métier. Notamment, les différents exemples peuvent être combinés, tant qu'ils ne sont pas contradictoires et qu'ils restent à l'intérieur du périmètre défini par la revendication 1.

## Revendications

1. Module de refroidissement (22) pour véhicule automobile (10) à moteur (12) électrique ou hybride, ledit module de refroidissement (22) étant destiné à être traversé par un flux d'air (F) et comportant un boîtier (41) configuré pour recevoir une turbomachine tangentielle (30) elle-même configurée pour générer le flux d'air (F), la turbomachine tangentielle (30) comprenant une turbine (32) montée rotative autour d'un axe de rotation (A), la turbine (32) comprenant au moins un étage de pales (32a, 32b, 32c, 32d et 32e) formant un cylindre creux (C), la turbomachine (30) comprenant également un moteur (31) configuré pour entraîner la turbine (32) en rotation autour de l'axe de rotation (A), le moteur (31) comportant un stator (311) et un rotor (312) monté rotatif autour du stator (311), le stator (311) du moteur (31) étant est solidaire du boîtier (41) de sorte que les pales de la turbine (32) sont disposées circonférentiellement autour du rotor (312) du moteur (31) et l'au moins un étage de pales (32a, 32b, 32c, 32d et 32e) de la turbine (32) est relié mécaniquement au rotor (312) du moteur (31) de sorte à être entraîné en rotation par ce dernier, l'axe longitudinal (R) du rotor (312) du moteur (31) étant confondu avec l'axe de rotation (A) de la turbine (32), **caractérisé en ce que** le rotor (312) comporte des bras (312a) qui s'étendent radialement depuis le rotor (312) jusqu'à la turbine (32) de manière à solidariser le rotor (312) à la turbine (32).

2. Module de refroidissement selon la revendication précédente, **caractérisé en ce que** les bras (312a) radiaux liant le rotor (312) à la turbine (32) sont disposés avec un intervalle angulaire régulier autour de l'axe de rotation (A) de la turbine (32).

3. Module de refroidissement selon l'une quelconque des revendications précédentes, **caractérisé en ce que** le stator (311) est fixé sur une plaquette (33) solidaire d'une paroi latérale (43) du boîtier collecteur (41) de sorte que le moteur (31) soit disposé à une première extrémité (30a) de la turbine (32).

4. Module de refroidissement selon l'une quelconque des revendications précédentes, **caractérisé en ce qu'**une dimension longitudinale (Lm) du moteur (31) est supérieure à la valeur du diamètre (D) du moteur (31).

5. Module de refroidissement selon l'une quelconque des revendications précédentes, **caractérisé en ce que** la turbine (32) comporte une deuxième extrémité (30b) située à l'opposé de la première extrémité (30a) et **en ce que** cette deuxième extrémité (30b) comporte un moyen pour former une liaison pivot directe avec le boîtier collecteur (41).

6. Module de refroidissement selon la revendication précédente, **caractérisé en ce que** le moyen pour former une liaison pivot directe avec le boîtier collecteur (41) est un roulement ou un palier de roulement situé à l'intérieur du boîtier collecteur (41).

## Patentansprüche

1. Ein Kühlmodul (22) für ein Kraftfahrzeug (10) mit einem Elektro- oder Hybridmotor (12), wobei das Kühlmodul (22) so ausgelegt ist, dass ein Luftstrom (F) hindurchströmt, und ein Gehäuse (41) umfasst, das zur Aufnahme einer Tangentialströmungs-Turbomaschine (30) konfiguriert ist, die ihrerseits konfiguriert ist, den Luftstrom (F) zu erzeugen, wobei die Tangentialströmungs-Turbomaschine (30) eine Turbine (32) umfasst, die so montiert ist, dass sie sich um eine Rotationsachse (A) dreht, wobei die Turbine (32) mindestens eine Schaufelstufe (32a, 32b, 32c, 32d und 32e) umfasst, die einen Hohlzylinder (C) bilden, wobei die Turbomaschine (30) außerdem einen Motor (31) umfasst, der konfiguriert ist, die Turbine (32) in Rotation um die Rotationsachse (A) anzutreiben, wobei der Motor (31) einen Stator (311) und einen Rotor (312) umfasst, die drehbar um den Stator (311) montiert sind, wobei der Stator (311) des Motors (31) am Gehäuse (41) befestigt ist, sodass die Turbinenschaufeln (32) umfangsmäßig um den Rotor (312) des Motors (31) angeordnet sind, und wobei die mindestens eine Schaufelstufe (32a, 32b, 32c, 32d und 32e) der Turbine (32) mechanisch mit dem Rotor (312) des Motors (31) verbunden ist, um von diesem in Rotation angetrieben zu werden, wobei die Längsachse (R) des Rotors (312) des Motors (31) mit der Rotationsachse (A) der Turbine (32) zusammenfällt,
**dadurch gekennzeichnet, dass** der Rotor (312) Arme (312a) aufweist, die sich radial vom Rotor (312) zur Turbine (32) erstrecken, um den Rotor (312) an der Turbine (32) zu befestigen.

2. Das Kühlmodul nach dem vorhergehenden Anspruch, **dadurch gekennzeichnet, dass** die radialen Arme (312a), die den Rotor (312) mit der Turbine (32) verbinden, in regelmäßigen Winkelabständen um die Rotationsachse (A) der Turbine (32) angeordnet sind.

3. Das Kühlmodul nach einem der vorhergehenden Ansprüche, **dadurch gekennzeichnet, dass** der Stator (311) an einer Platte (33) befestigt ist, die an einer Seitenwand (43) des Kollektorgehäuses (41) befestigt ist, sodass der Motor (31) an einem Ende (30a) (32) angeordnet ist.

4. Das Kühlmodul nach einem der vorhergehenden Ansprüche, **dadurch gekennzeichnet, dass** eine Längsabmessung (Lm) des Motors (31) größer ist als der Wert des Durchmessers (D) des Motors (31).

5. Das Kühlmodul nach einem der vorhergehenden Ansprüche, **dadurch gekennzeichnet, dass** die Turbine (32) ein zweites Ende (30b) aufweist, das dem ersten Ende (30a) gegenüberliegt, und dass dieses zweite Ende (30b) Mittel zur Bildung einer direkten Schwenkverbindung mit dem Kollektorgehäuse (41) aufweist.

6. Das Kühlmodul nach dem vorhergehenden Anspruch, **dadurch gekennzeichnet, dass** die Mittel zur Bildung einer direkten Schwenkverbindung mit dem Kollektorgehäuse (41) ein Lager oder ein Wälzlager ist, das im Kollektorgehäuse (41) angeordnet ist.

## Claims

1. A cooling module (22) for a motor vehicle (10) with an electric or hybrid motor (12), said cooling module (22) being designed to have an airflow (F) passing through it and comprising a housing (41) configured to receive a tangential-flow turbomachine (30) itself configured to generate the airflow (F), the tangential-flow turbomachine (30) comprising a turbine (32) mounted so as to rotate about an axis of rotation (A), the turbine (32) comprising at least one stage of blades (32a, 32b, 32c, 32d et 32e) forming a hollow cylinder (C), the turbomachine (30) also comprising a motor (31) configured to drive the turbine (32) in rotation about the axis of rotation (A), the motor (31) comprising a stator (311) and a rotor (312) mounted rotatably about the stator (311), the stator (311) of the motor (31) being secured to the housing (41) so that the turbine blades (32) are arranged circumferentially around the rotor (312) of the motor (31), and the at least one blade stage (32a, 32b, 32c, 32d et 32e) of the turbine (32) is mechanically connected to the rotor (312) of the motor (31) so as to be driven in rotation by the latter, the longitudinal axis (R) of the rotor (312) of the motor (31) coinciding with the axis of rotation (A) of the turbine (32),
**characterized in that** the rotor (312) has arms (312a) which extend radially from the rotor (312) to the turbine (32) so as to secure the rotor (312) to the turbine (32).

2. The cooling module as claimed in the preceding claim, **characterized in that** the radial arms (312a) connecting the rotor (312) to the turbine (32) are arranged at regular angular intervals around the axis of rotation (A) of the turbine (32).

3. The cooling module as claimed in one of the preceding claims, **characterized in that** the stator (311) is fixed to a plate (33) secured to a side wall (43) of the collector housing (41), so that the motor (31) is located at one end (30a) (32).

4. The cooling module as claimed in any one of the preceding claims, **characterized in that** a longitudinal dimension (Lm) of the motor (31) is greater than the value of the diameter (D) of the motor (31).

5. The cooling module as claimed in one of the preceding claims, **characterized in that** the turbine (32) has a second end (30b) located opposite the first end (30a), and **in that** this second end (30b) has means for forming a direct pivot connection to the collector housing (41).

6. The cooling module as claimed in the preceding claim, **characterized in that** the means for forming a direct pivot connection to the collector housing (41) is a bearing or a rolling bearing located inside the collector housing (41).
